# EUROPEAN PATENT SPECIFICATION

(11) **EP 3 837 398 B1**
(45) Date of publication and mention of the grant of the patent: **28.09.2022**
(21) Application number: 19752487.9
(22) Date of filing: 08.08.2019
(51) Int. Cl.: E02F 9/20, E02F 9/22, F04B 49/06, B29C 45/82, B30B 1/00, F15B 11/17, F15B 21/14, B30B 15/18, F04B 49/22, F15B 11/08

(54) **DIGITAL PUMP AXIS CONTROL SYSTEM**
SYSTEM ZUR STEUERUNG DER ACHSE EINER DIGITALEN PUMPE
SYSTÈME DE COMMANDE D'AXE DE POMPE NUMÉRIQUE

(30) Priority: 16.08.2018 DE 102018120001
(43) Date of publication of application: 23.06.2021
(73) Proprietor: Moog Italiana S.r.l., 21046 Malnate (VA) (IT)
(72) Inventor: CONSONNI, Giorgio Maria, 20124 Milano (IT); PRENCIPE, Riccardo Matteo, 20162 Milano (IT)
(74) Representative: Wittmann, Ernst-Ulrich
(86) International application number: PCT/EP2019/071336
(87) International publication number: WO 2020/035391

(56) References cited:
- EP-A1- 3 358 202
- WO-A1-02/04820
- WO-A1-2006/107242
- WO-A2-2006/060638
- DE-A1-102010 020 690
- GB-A- 2 409 241
- US-A1- 2004 146 417
- US-A1- 2014 017 092
- US-A1- 2014 147 293
- US-A1- 2017 121 940
- US-B1- 6 557 344

## Description

The present invention relates to a digital pump system, especially to a digital pump axis control system.

Pump axis control systems are vastly known in the prior art and are mostly used to control deep drawing machines, injection moulding machines and in general pressing machines. However, their use is not limited to these types of machines and can be used for all machines in which a pump system is necessary.

US6557344 discloses a hydraulic drive having a first and a second hydraulic machine, wherein the two hydraulic machines are also used to supply at least one further hydraulic consumer without an additional hydraulic pump.

One of the main problems in pump control systems and generally in electro-hydrostatic drive units is the vast amount of energy needed for a work cycle of the machine. Unfortunately, many systems require even more energy, due to a continuous energy loss in various steps of the work process.

It is therefore the aim of the following invention to provide a pump axis control system which not only at least partially reduces the energy required for a such a process, but which also manages to at least partially recover and at least partially reduce the unnecessary loss of energy during a work process.

The aim is solved by a digital pump axis control system as defined in independent claim 1, with preferred embodiments defined in dependent claims 2 to 8. Claims 9-14 define methods for using the digital pump axis control system defined in claim 1 and the apparatus sub-claims. Claim 15 defines various uses of the pump axis control system of claim 1. The digital pump axis control system of the invention is a circuit being at least partially open. The circuit comprises an electric engine, powering first and second hydraulic machines, the first and second hydraulic machines being connected in a rotationally locked manner to each other; at least one cylinder, having a first chamber and a second chamber, wherein the first chamber of the cylinder is connected through a first pipeline to the first hydraulic machine and the second chamber of the cylinder is connected through a second pipeline to the second hydraulic machine. According to this embodiment the system further comprises a first valve arranged in the first pipeline; a second valve arranged in the second pipeline; a third valve arranged in a third pipeline, wherein the third pipeline connects a portion of the first pipeline arranged between the first hydraulic machine and the first valve with a portion of the second pipeline arranged between the second hydraulic machine and the second valve; the embodiment further comprises an open tank providing hydraulic fluid to inlets of the first and second hydraulic machines. The digital pump system of this preferred embodiment is further characterized in that the first and second hydraulic machines are digital variable displacement pumps, each providing a positive and a negative displacement of hydraulic fluid.

According to the above embodiment, the system comprises an electric engine powering a first and a second hydraulic machine. These hydraulic machines are used to provide a displacement of hydraulic fluid through the system and according to the embodiment they are connected to each other in a rotationally locked manner, meaning that they rotate in the same direction.

The displacement of fluid provided by the hydraulic machines results in a movement of the rod in the cylinder. The cylinder has two chambers, wherein one chamber, the first one, is connected through a pipeline to the first hydraulic machine, and the second chamber is connected to the second hydraulic machine, through a second pipeline.

The terms "positive displacement" and "negative displacement" of hydraulic fluid are defined herewith as a movement of hydraulic fluid created by the hydraulic machines towards the cylinder and a movement of hydraulic fluid created by the hydraulic machines away from the cylinder. In some case it is also described as a push of hydraulic fluid from the hydraulic machines and a drawing of hydraulic fluid from the hydraulic machine, however this definition is only used when it is clear from where and into what a hydraulic machine is drawing and pushing hydraulic fluid.

Characterizing this embodiment is the fact that the first and second hydraulic machines are both digital variable displacement pump which can independently provide a positive and negative displacement, (even though they are connected in a rotationally locked manner to each other).

From now on, the terms "digital variable displacement pump" and "pump" are used in an interchangeable manner.

According to the invention, the two digital variable displacement pumps are connected in a rotationally locked manner. They can both provide positive and negative displacement of hydraulic fluid. Through different switch position of the valves in the system, it is hence possible to have various working cycles of the cylinder, i.e. rapid speed or force speed, depending on the action a tool, attached to the cylinder, needs to accomplish. The rotationally locked connection of the displacement pumps is advantageously as a force pushing one of the pumps in one direction of rotation, results in a rotation of the other pump. The electric engine is therefore an energy generator through which some of the rotational energy can be saved or at least reused. Later in the description these aspects are described more in detail.

According to a further embodiment, the digital variable displacement pumps provide independent or coordinated displacement of hydraulic fluid. These degree of freedom in the type of displacement each pump can produce independently from the other, guarantees a better adjustment of the various work cycles of the press, resulting in a better energy management.

According to a further embodiment the digital variable displacement pumps can provide different volume of hydraulic fluid and/or hydraulic fluid with different pressure. This embodiment adds an even further degree of freedom, guaranteeing that even though the pumps are locked rotationally they can each work independently from each other.

The two digital variable displacement pumps are independent from each other and therefore manage to supply different volume and different pressure of hydraulic fluid in different directions, notwithstanding the fact that they are connect in a rotationally locked manner with each other.

With the term "same displacement" it is therefore meant that the pumps both create a positive or a negative displacement of hydraulic fluid. The volume of hydraulic fluid that is displaced by each pump is however not necessarily the same, and each pump can be singularly set to displace a certain volume of hydraulic fluid per second.

Preferred types of digital variable displacement pumps according to a further embodiment are axial piston pumps, bent axis pumps, variable displacement vane pumps, radial piston pumps or similar types of pump.

The digital variable displacement pumps can work in various way. Usually the output of a variable displacement pump can be changed by altering the geometry of the displacement chamber, and more specifically in piston pumps by varying the angle of the swash plate through tilting.

In variable displacement vane pumps for example the gear is offset and the cogs aren't fixed, but rather extend and retract as the gear turns, allowing the pump to increase the pressure of the fluid by compacting it as it pushes the fluid through.

According to a further embodiment the cylinder is a differential cylinder having a rod chamber and a piston chamber. This type of cylinder is especially suited for a pressing system; however, the system can work with whatever type of cylinder is required i.e. a symmetric cylinder, a synchronized cylinder, telescopic cylinder and similar.

A differential cylinder is defined as being a cylinder which has at least two different chambers with different volumes. The rod chamber is defined as the chamber in which the rod is attached to the piston while the piston chamber is the chamber in which the piston's face is faced. Alternatively, a rod can be attached to the piston also on the piston side, however it needs to have a smaller diameter than the rod on the rod side in order to define the cylinder as a differential cylinder. The tool for pressing is usually attached to the bigger rod.

The cylinder, independent from which type of cylinder it is, is, according to a further embodiment, operable in rapid and/or force speed mode.

In a usual work cycle of the cylinder there are 4 main phases which have to be considered. Firstly, the cylinder, needs to be moved quickly towards the tool to be processed. This is called "rapid speed down" and requires relatively small amount of pressure of hydraulic fluid, but greater displacement of volume.

The second phase is the phase in which the tool is being processed. This is the phase in which most strength is required and is therefore defined as the "force speed" of the cylinder. In this phase high pressure of hydraulic fluid but little volume is required.

In the third phase a decompression occurs. The high pressure in the system required during the previous phase, needs to be reduced without causing a movement of the cylinder; this achieved through decompressing the hydraulic fluid in the system.

The fourth and final phase is the "rapid speed up" in which the cylinder is quickly pushed away from the processed tool, for example for a tool exchange.

According to a further embodiment, the first valve is situated on a first pipeline connecting the first chamber of the cylinder with the first hydraulic machine. The second valve is situated on a second pipeline connecting the second chamber of the cylinder with the second hydraulic machine. According to a further embodiment the first and the second valves are controlled 2/2-way valves having a closed state and an open state. According to even a further embodiment the first and the second valves further comprise a position monitoring device to increase the security measures of the system and guaranteeing that the valves are correctly switched.

The third valve is positioned on a third pipeline which connects the first and the second pipeline. This third valve can also be a 2/2-way valves having a closed state and an open state according to a further embodiment of the invention. Position monitoring device on the third valve can be also attached in some further embodiments.

As mentioned earlier the third pipeline connects the first pipeline to the second pipeline. It is therefore possible through switching the third valve to have both hydraulic machine work together on the same chamber of the cylinder.

According to a further embodiment a further tank is hydraulically connected with the second chamber of the cylinder through a fourth valve having an open and a closed state. The use of a tank is especially advantageous in both the rapid speed down phase and rapid speed up phase as will be explained further in detail later in the description. According to a further embodiment, and in order to reduce material cost for the system, it is possible that the further tank and the open tank are one single tank.

According to even a further embodiment a controlled pilot valve to pilot open the fourth valve is connected through a further pipeline to the fourth valve. The controlled pilot valve can be controlled in many ways, however according to an even further embodiment a pressure source is connected to the controlled pilot valve in order to control the pilot valve through pressurized hydraulic fluid coming from the pressure source. According to further embodiments the pilot valve is a controlled 2/3-way valve having a pressurized state and a depressurized state.

It is a further aim of the current invention to provide an inventive method for using one of the many embodiments of the system, as described above.

According to one embodiment of a method for using the digital pump axis control system of any of the preceding embodiments in which the further tank is not present, a downwards movement of the cylinder is achieved by switching the third valve to close, and by switching the first and second valves to open. Further the first digital variable displacement pump is switched to provide a negative displacement of hydraulic fluid, and the second digital variable displacement pump is switched to provide a positive displacement of hydraulic fluid,

By closing the third valve, according to this method, the first and second pipelines are not connected to each other, and the first pump works exclusively on the first chamber of the cylinder and the second pump exclusively on the second chamber of the cylinder.

By having the first digital variable displacement pump providing a negative displacement and the second digital variable displacement pump providing a positive displacement of hydraulic fluid, a movement of the cylinder downwards is achieved.

More specifically, fluid is being drawn by the first digital variable displacement pump from the first chamber of the cylinder into the open tank, while hydraulic fluid is being drawn from the open tank, by the second digital variable displacement pump, into the second chamber of the cylinder.

This causes a movement of the cylinder downwards as the high pressure and the high volume of fluid in the second chamber is pushing the rod of the cylinder downwards, while the fluid from the first chamber of the cylinder is released through the first pump into the open tank.

Because the high pressure in the second chamber of the cylinder is pushing the cylinder downwards, the hydraulic fluid in the first chamber needs to be released. The first valve is set to open and therefore the hydraulic fluid is being pushed from the first chamber of the cylinder through the first pipeline and through the first pump into the open tank. Therefore, advantageously, less energy is required by the first pump to generate a negative displacement from the first chamber into the open tank. The displacement of fluid from the first chamber of the cylinder causes a torque movement of the first pump and hence it generates energy. Positive in this embodiment is therefore that the energy caused by the displacement of hydraulic fluid is not being wasted but either reused for assisting the torque movement of the pump, or at least partially saved by the electric engine and reused in some other process.

According to another embodiment of the method, the upwards movement of the cylinder is achieved by switching to close the third valve, switching to open the first and second valves; switching the first digital variable displacement pump to provide a positive displacement of hydraulic fluid and switching the second digital variable displacement pump to provide a negative displacement of hydraulic fluid.

With the same but opposite reasoning of the embodiment above an upwards moment of the cylinder is achieved. Again, energy caused by the torque movement of the second pump can be reused for moving the pumps or at least saved for some further application. Energy consumption is therefore minimized.

According to even a further embodiment of the method for using the digital pump axis control system the first, second and third valve are switched open, and the first and second digital variable displacement pumps are switched to provide the same displacement of hydraulic fluid towards the second chamber of the cylinder such that a low force downwards movement of the cylinder is achieved.

Further, according to another embodiment the motor acts as an energy generator during a decompression phase of the cylinder.

In a further embodiment of a method for using a digital pump control system in those embodiments of the system in which a tank is attached to the piston chamber of the cylinder, the second valve is switched to close and the pilot valve is switched to a depressurized state while the first and third valve are switched to open. Further, the first and second digital variable displacement pumps are switched to provide the same displacement of hydraulic fluid from the first chamber of the cylinder to the open tank, such that the further tank causes a displacement of hydraulic fluid into the second chamber to compensate the volume of hydraulic fluid missing in the system.

In this embodiment, the first and the second digital variable displacement pumps are switched to provide the same displacement of fluid from the first chamber into the open tank, in order to achieve a downwards movement of the cylinder. This fluid displacement causes a state of low pressure in the second chamber. This under-pressure in the second chamber of the cylinder causes the fourth valve, which is pressure regulated to open and hydraulic fluid is displaced from the tank into the second chamber.

This method is especially advantageously, as with the two pumps displacing in the same direction a quicker movement of the cylinder is achieved, minimizing therefore the time requirements for a process cycle and consequently minimizing general costs.

As mentioned earlier in the application, the decompression phase after having processed a tool is fundamental for the appropriate and fault free use of the system.

In an even further embodiment of the method the third valve is switched to close and the pilot valve is switched to a depressurized state whereby the fourth valve is closed while the first and second valves are switched to open. This situation is similar to the embodiments were the further tank was not present in the system (as the fourth valve is closed). Further in this embodiment a decompression phase of the cylinder occurs and a displacement of hydraulic fluid from the second chamber to the open tank causes a torque movement of the second digital variable displacement pump through which the electric engine acts as an energy generator.

More specifically, due to the decompression a relaxation of hydraulic fluid both in the cylinder chambers as in the pipeline occurs. This relaxation causes a displacement of hydraulic fluid through the pipelines and through the digital variable displacement pump causing a torque movement of the pump. This torque movement can be interpreted as energy which the motor generates. This is clearly advantageous as this decompression energy would otherwise be lost energy, while through this embodiment it can be reused or at least saved by the electric engine for some other process.

Consequently, following the various work cycles of the cylinder, an embodiment in which a rapid speed upwards movement of the cylinder occurs is also described. Specifically, in a further embodiment of the method the pilot valve is switched to a pressurized state, whereby the fourth valve is opened, and the first and third valves are switched open while the second valve is switched closed. Further in this embodiment the first and second digital variable displacement pumps are switched to provide the same displacement of hydraulic fluid towards the first chamber of the cylinder, such that the cylinder has a rapid speed upwards movement and the hydraulic fluid in the second chamber of the cylinder is displaced into the tank through the open fourth valve.

This method is advantageous as it "refills" the tank with some of the hydraulic fluid of the second chamber. As the second valve is closed, it is fundamental to guarantee a release of hydraulic fluid when the piston is being pushed up. This is achieved by opening the fourth valve and guaranteeing a displacement of fluid from the second chamber into the tank.

Finally, it is also the aim of the following invention to use, both the inventive system as the inventive method for a pressing machine, a deep drawing machine or similar machines. However as mentioned above, the use of this system is not limited to presses and can be used in whatever process a pump system is required.

Further aspects of the invention are obtained from the following detailed description of one possible embodiment of the invention in conjunction with the drawing and the claims. It is pointed out that modifications or additions as are deduced directly for the person skilled in the art are covered by these examples. Furthermore, the preferred exemplary embodiments do not constitute any restriction of the invention so that modifications and additions also lie within the scope of the present invention.

The accompanying drawings incorporated herein and forming part of the specification, illustrate several aspects of the present invention and together with the description serve to explain certain principles of the invention. In the drawings:
**Fig. 1** shows a pump axis control system according to a first embodiment of the current invention;
**Fig. 2a** shows a switch arrangement of the valves for a downwards movement of the system of Figure 1;
**Fig. 2b** shows a switch arrangement of the valves for an upwards movement of the system of Figure 1;
**Fig. 3** shows a pump axis control system according to a second embodiment of the current invention, in which a further tank is arranged;
**Fig. 4a** shows a switching arrangement of the valves for a downwards movement of the system of Figure 3;
**Fig. 4b** shows a switching arrangement of the valves for a decompression phase of the system of Figure 3;
**Fig. 4c** shows a switching arrangement of the valves for an upwards movement of the system of Figure 3.

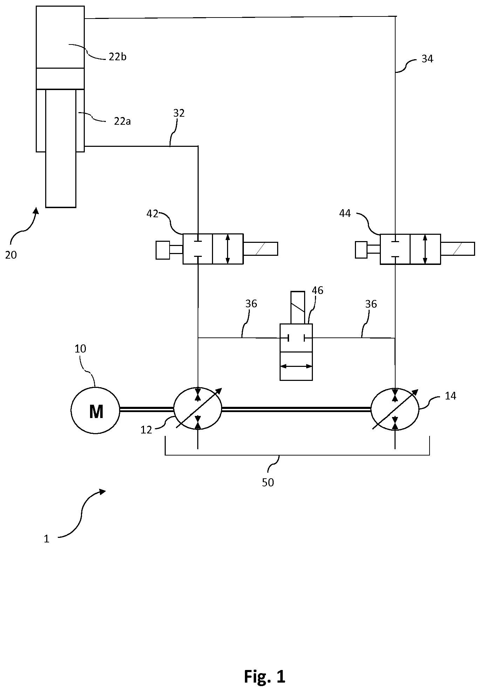

As can be taken from **Figure 1****,** this embodiment of the system 1 of the current invention has two digital variable displacement pumps, more precisely, a first digital variable displacement pump 12 and a second digital variable displacement pump 14. The first and second pumps 12, 14 are connected in a rotationally locked manner to each other as well as to an electric engine 10. The inlets of the two pumps 12 and 14 are hydraulically connected to an open tank 50 in which relaxed hydraulic fluid is available.

Further, a cylinder 20, which in this embodiment is a differential cylinder 20 having a first chamber 22a which is the rod chamber, and a second chamber 22b, which is the piston chamber, is arranged into the system 1.

The first chamber 22a is hydraulically connected to the first digital variable displacement pump 12 through a first pipeline 32 passing over a controlled 2-way valve 42, having a position monitoring device.

The second chamber 22b is hydraulically connected to the second digital variable displacement pump 14 through a second pipeline 34 passing over a controlled 2-way valve 44, having a position monitoring device.

Between the first valve 42 and the first pump 12 and between the second valve 44 and the second pump 14 a third pipeline 36 connects the first pipeline 32 with the second pipeline 34, passing over a third controlled 2-way valve 46.

In the figure all valves are switched to a closed position. This is a state which nearly never occurs, but has been used here in order to solely describe the arrangement of the various components. In the next figures the various switch position of the valves and the consequence of this switch arrangements are being described more in detail.

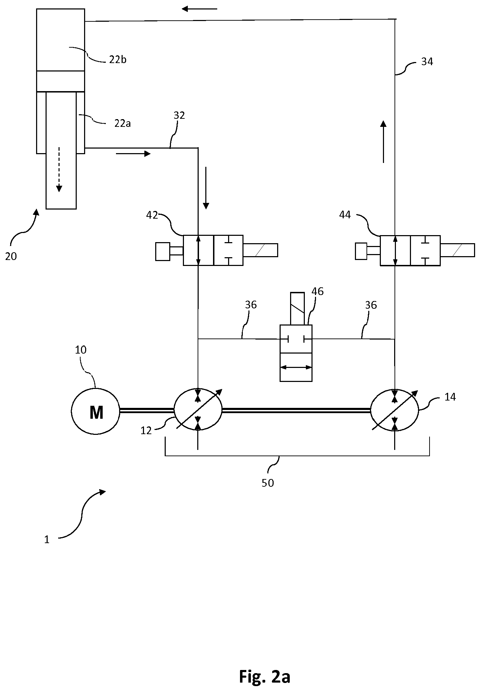

**Figure 2a** shows the setting of the valves of system 1 of Figure 1 required to achieve a downwards movement of the cylinder 20. Same referencing numbers are used for the same object as in figure 1.

As can be seen the third valve 46 is switched to close, such that the first digital variable displacement pump 12 only works on the first chamber 22a of the cylinder 20, while the second digital variable displacement pump 14 only works on the second chamber 22b of the differential cylinder 20.

In this embodiment, even though the two pumps are connected in a rotationally locked manner with each other, the displacement of hydraulic fluid caused by the pumps is different. The first pump 12 provides a negative displacement drawing hydraulic fluid from the first chamber 22a of the differential cylinder 20 and releasing it into the open tank 50.

The second digital variable displacement pump 14 instead draws hydraulic fluid from the open tank 50, and with a positive displacement pushes it into the second chamber 22b of the differential cylinder 20, providing hence a downwards movement of the piston, as can be taken from the dashed arrow in the figure.

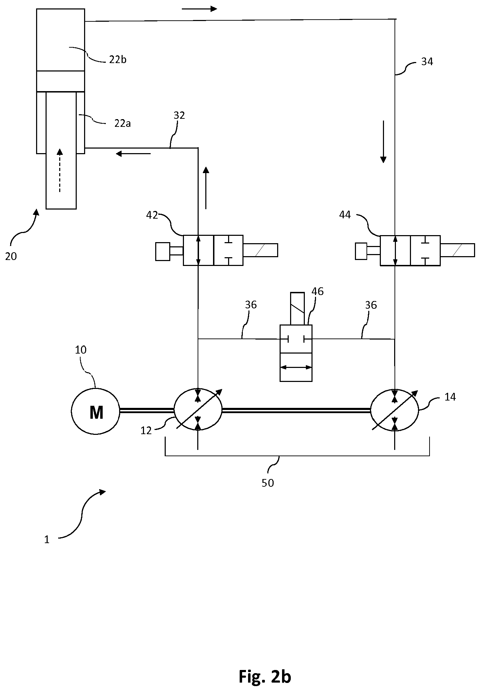

**Figure 2b** shows the setting of the valves of system 1 of Figure 1 required to achieve an upwards movement of the cylinder 20. Same referencing numbers are used for the same object as in figure 1.

The embodiment is similar to the one of figure 2a and the valves have the same settings as before. The difference is that the first digital variable displacement pump 12 provides a positive displacement of hydraulic fluid from the open tank 50 into the first chamber 22a of the differential cylinder 20, while the second digital variable displacement pump 14 provides a negative displacement of hydraulic fluid from the second chamber 22b of the differential cylinder 20 into the open tank 50. As such, an upwards movement of the cylinder 20 is achieved.

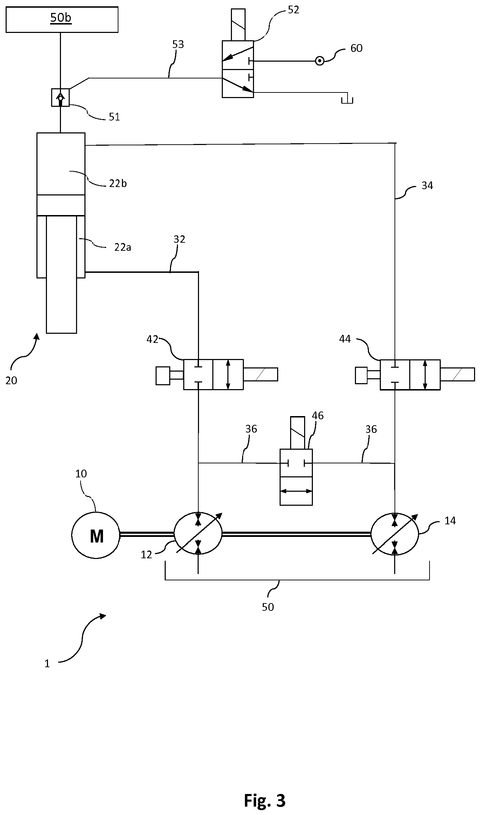

**Figure 3** shows a second embodiment of the system 1 in which the first embodiment depicted in Figure 1 has been implemented with a further tank 50b. Same referencing numbers are used for the same object as in figure 1.

More specifically a tank 50b is hydraulically connected to the second chamber 22b of the differential cylinder 20 trough a fourth valve 51, more precisely a pressure controlled non-return valve 51.

A further pipeline 53 connects the fourth valve 51 with a pressure generator through a pilot valve 52 having a pressurized and a depressurized setting. When the pilot valve is pressurized, pressurized fluid is pushed toward the fourth valve 51 opening it.

In the figure all valves are switched to a closed position. This is a state which nearly never occurs, but has been used here in order to solely describe the arrangement of the various components. In the next figures the various switch position of the valves and the consequence of this switch arrangements are being described more in detail.

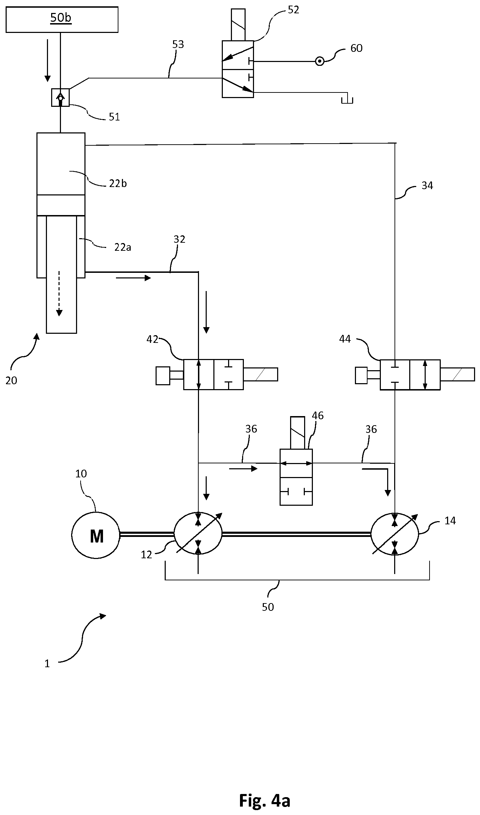

**Figure 4a** shows a valve switch arrangement in which the cylinder 20 can be moved downwards. As can be taken from the figure, the first and the third valve 42 and 46 are switched to open, while the second valve 44 is switched closed and the pilot valve 52 is depressurized.

Both the first and the second digital variable displacement pump 12 and 14 work in parallel and provide a negative displacement of hydraulic fluid. In this arrangement, the second digital variable displacement pump 14, which usually works on the second chamber 22b of the cylinder 20, works together with the first digital variable displacement pump 12 on the first chamber 22a of the differential cylinder 20.

Therefore, hydraulic fluid is drawn quickly and strongly from the first chamber 22a through the pipeline 32 and the pipeline 36 and through the two pumps 12, 14 into the open tank 50.

In order to have a pressure equilibrium, hydraulic fluid needs to enter chamber 22b contemporaneously. In fact, the pressure of chamber 22b diminishes with the consequence that the fourth valve 51 opens, and hydraulic fluid from the tank 50b flows into the second chamber 22b of the differential cylinder 20.

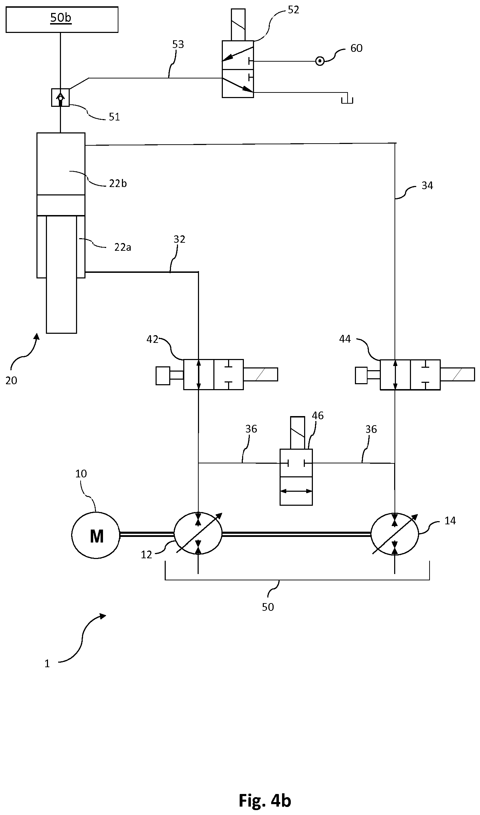

**Figure 4b** shows the embodiment of system 1, according to Figure 3 in a decompression phase.

This phase starts after the system was running in force speed and the tool was processed. Before decompression the pressure of the hydraulic fluid in the second chamber 22b of the cylinder 20 is very high. Before the cylinder 20 can be pushed upwards again, a decompression of the hydraulic fluid needs to occur in the second chamber 22b of the cylinder 20.

The decompression is achieved by closing both the third and the fourth valves 46 and 51 while opening both the first and the second valves 42 and 44, without activating the second pump 14.

Due to the high pressure in the second chamber 22b of the cylinder 20, opening the second valve causes a displacement of hydraulic fluid from the second chamber 22b through the second pipeline 34 and through the pump14 into the open tank 50. This causes a torque movement of the pump 14, which generates energy which can be used contemporaneously as an aid for running the first pump 12, which actively provides a positive displacement into the first chamber 22a. Alternatively the energy can also be saved and reused for further processes.

This embodiment is extremely advantageous as the energy generated by the torque movement of the inactive pump 14, is not lost, but reused for the movement of the first pump 12.

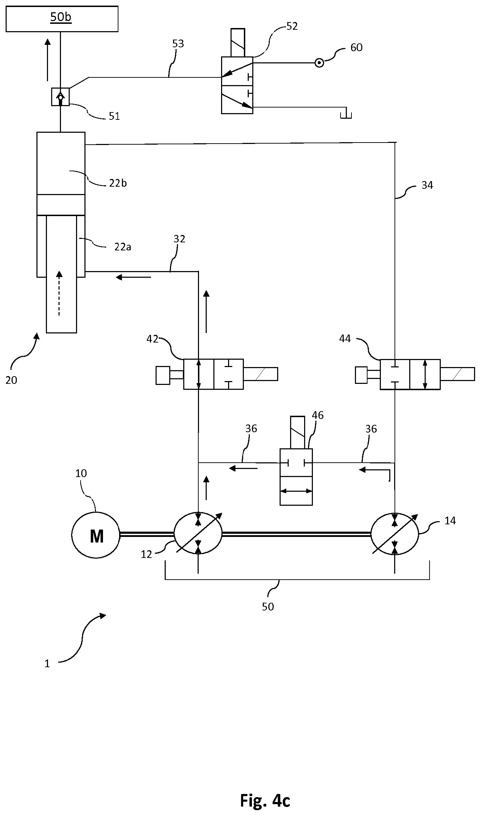

After the decompression a movement of the cylinder in the upwards direction as shown in **Figure 4c** can be achieved.

In this embodiment the second valve 44 is closed. The first and third valve 42, 46 are open such that both the first 12 and the second 14 digital variable displacement pump can jointly and parallel work together on the first chamber 22a for the cylinder 20.

The two pumps draw hydraulic fluid from the open tank 50 and displace it into the first chamber 22a of the cylinder 20. The piston is pushed upwards and consequently the hydraulic fluid in the second chamber 22b of the cylinder needs to be released or it over pressurized and can cause a failure of the system as well as severe damages. To achieve this, the valve 52 is pressurized, such that the pressurized fluid runs through the pipeline 53 and causes the fourth valve 51 to open.

In this way, while the piston is being pushed up, the hydraulic fluid from the second chamber 22b of the cylinder 20 can escape into the tank 50b. In this way the tank 50b is refilled and the contained hydraulic fluid can be reused in a further phase.

| | |
|---|---|
| 1 digital pump axis control system | 36 third pipeline |
| 10 electric engine | 42 controlled first 2-way valve |
| 12 first digital variable displacement pump | 44 second controlled 2-way valve |
| 14 second digital variable displacement pump | 46 third controlled 2-way valve |
| | 50 open tank |
| 20 cylinder | 50b tank |
| 22a first chamber of the cylinder | 51 one-way pressure controlled valve |
| 22b second chamber of the cylinder | 52 controlled 3-way valve |
| 32 first pipeline | 53 pipeline |
| 34 second pipeline | 60 pressure source |

## Claims

1. Digital pump axis control system (1) with an at least partially open circuit comprising:
an electric engine (10), powering a first and a second hydraulic machine (12, 14), wherein the first and second hydraulic machines (12, 14) are connected in a rotationally locked manner to each other;
at least one cylinder (20), having a first chamber (22a) and a second chamber (22b), wherein the first chamber (22a) of the cylinder (20) is connected through a first pipeline (32) to the first hydraulic machine (12) and the second chamber (22b) of the cylinder (20) is connected through a second pipeline (34) to the second hydraulic machine (14);
a first valve (42) arranged in the first pipeline (32);
a second valve (44) arranged in the second pipeline (34);
a third valve (46) arranged in a third pipeline (36), wherein the third pipeline (36) connects a portion of the first pipeline (32) arranged between the first hydraulic machine (12) and the first valve (42) and a portion of the second pipeline (34) arranged between the second hydraulic machine (14) and the second valve (44); and
an open tank (50) providing hydraulic fluid to inlets of the first and second hydraulic machines (12, 14),
**characterized in that**
the first and second hydraulic machines (12, 14) are digital variable displacement pumps, each providing a positive and a negative displacement of hydraulic fluid, and wherein the third valve (46) enables both hydraulic machines (12, 14) to work together on the same chamber (22a, 22b) of the cylinder (20).

2. Digital pump axis control system (1) according to claim 1, wherein the digital variable displacement pumps (12, 14) provide independent or coordinated displacement of hydraulic fluid, and/or wherein the digital variable displacement pumps (12, 14) provide different volume of hydraulic fluid and/or hydraulic fluid with different pressure, into the system (1), wherein the digital variable displacement pumps (12, 14) are axial piston pumps, bent axis pumps, variable displacement vane pumps, radial piston pumps or similar.

3. Digital pump axis control system (1) according to any of the preceding claims, wherein the cylinder (20) is a differential cylinder (20), especially a differential cylinder (20) having a rod chamber (22a) and a piston chamber (22a), and/or wherein the cylinder (20) is operable in rapid and/or in force speed.

4. Digital pump axis control system (1) according to any of the preceding claims, wherein the first and the second valves (42, 44) are controlled 2/2-way valves having a closed state and an open state, and/or wherein the first and the second valves (42, 44) further comprise a position monitoring device.

5. Digital pump axis control system (1) according to any of the preceding claims, wherein the third valve is a controlled 2/2-way valve having a closed state and an open state.

6. Digital pump axis control system (1) according to any of the preceding claims, wherein a tank (50b) is hydraulically connected with the second chamber (22b) of the cylinder (20) through a fourth valve (51) having an open and a closed state, and/or wherein a controlled pilot valve (52) to pilot open the fourth valve (51) is connected through a further pipeline (53) to the fourth valve (51).

7. Digital pump axis control system (1) according to claim 6, wherein a pressure generator is connected to the controlled pilot valve (52) in order to control the pilot valve (52) through pressurized hydraulic fluid coming from a pressure source (60).

8. Digital pump axis control system (1) according to claim 6 or 7, wherein the pilot valve (52) is a controlled 2/3-way valve having a pressurizing state and a depressurizing state.

9. Method for using the digital pump axis control system of any of the preceding claims, wherein:
the third valve (46) is switched to close, and
the first and second valves (42, 44) are switched to open;
the first digital variable displacement pump (12) is switched to provide a positive displacement of hydraulic fluid, and
the second digital variable displacement pump (14) is switched to provide a negative displacement of hydraulic fluid,
such that an upwards movement of the cylinder is achieved.

10. Method for using the digital pump axis control system of claims 1-8, wherein:
the third valve (46) is switched to close, and
the first digital variable displacement pump (12) is switched to provide a negative displacement of hydraulic fluid, and
the second digital variable displacement pump (14) is switched to provide a positive displacement of hydraulic fluid,
such that a downwards movement of the cylinder is achieved.

11. Method for using the digital pump axis control system of claims 1-8 wherein:
the first, second and third valve (42, 44, 46) are switched open, and
the first and second digital variable displacement pumps (12, 14) are switched to provide the same displacement of hydraulic fluid towards the second chamber (22b) of the cylinder (20),
such that a low force downwards movement of the cylinder (20) is achieved.

12. Method for using the digital pump axis control system (1) according to claim 7 or 8, wherein:
the second valve (44) is switched to closed and the pilot valve (52) is switched to the depressurizing state, and
the first and third valve (42, 46) are switched open, and
the first and second digital variable displacement pumps (12, 14) are switched to provide the same displacement of hydraulic fluid from the first chamber (22a) of the cylinder (20) to the open tank (50),
such that the tank (50b) causes a displacement of hydraulic fluid into the second chamber (22b) to compensate the volume of hydraulic fluid in the system (1).

13. Method for using the digital pump axis control system (1) according to claim 7 or 8, wherein:
the third valve (46) is switched to closed and the pilot valve (52) is switched to depressurized state such that the fourth valve (51) is closed;
the first and second valve (42, 44) are switched open;
such that a decompression phase of the cylinder (20) occurs and a displacement of hydraulic fluid from the second chamber (22b) to the open tank (50) causes a torque movement of the second digital variable displacement pump (14) through which the motor (10) acts as an energy generator.

14. Method for using the digital pump axis control system (1) according to claim 7 or 8, wherein:
the pilot valve (52) is switched to pressurized state, whereby the fourth valve (51) is opened, and
the first and third valves (42, 46) are switched open and the second valve (44) is switched closed; and
the first and second digital variable displacement pumps (12, 14) are switched to provide the same displacement of hydraulic fluid towards the first chamber (22a) of the cylinder (20),
such that the cylinder has a rapid speed upwards movement and the hydraulic fluids in the second chamber (22b) of the cylinder (20) is displaced into the tank (50b) through the open fourth valve (51).

15. Use of the digital pump axis control system (1) of any of the claims 1 to 8, according to the method of claims 9 to 14, for pressing machines, deep drawing machines or injection moulding machines.

## Patentansprüche

1. Digitales Pumpenachsensteuerungssystem (1) mit einer zumindest teilweise offenen Schaltung, umfassend:
einen Elektromotor (10), der eine erste und eine zweite hydraulische Maschine (12, 14) antreibt, wobei die erste und zweite hydraulische Maschine (12, 14) drehfest miteinander verbunden sind;
mindestens einen Zylinder (20) mit einer ersten Kammer (22a) und einer zweiten Kammer (22b), wobei die erste Kammer (22a) des Zylinders (20) über eine erste Rohrleitung (32) mit der ersten hydraulischen Maschine (12) und die zweite Kammer (22b) des Zylinders (20) über eine zweite Rohrleitung (34) mit der zweiten hydraulischen Maschine (14) verbunden ist;
ein erstes Ventil (42), das in der ersten Rohrleitung (32) angeordnet ist;
ein zweites Ventil (44), das in der zweiten Rohrleitung (34) angeordnet ist;
ein drittes Ventil (46), das in einer dritten Rohrleitung (36) angeordnet ist, wobei die dritte Rohrleitung (36) einen Teil der ersten Rohrleitung (32), der zwischen der ersten hydraulischen Maschine (12) und dem ersten Ventil (42) angeordnet ist, und einen Teil der zweiten Rohrleitung (34), der zwischen der zweiten hydraulischen Maschine (14) und dem zweiten Ventil (44) angeordnet ist, verbindet; und
einen offenen Tank (50) zum Bereitstellen von Hydraulikfluid an Einlässe der ersten und zweiten hydraulischen Maschine (12, 14),
**dadurch gekennzeichnet, dass**
die erste und die zweite hydraulische Maschine (12, 14) digitale variable Verdrängungspumpen sind, die jeweils eine positive und eine negative Verdrängung von Hydraulikfluid bereitstellen, und wobei das dritte Ventil (46) es beiden hydraulischen Maschinen (12, 14) ermöglicht, an derselben Kammer (22a, 22b) des Zylinders (20) zusammenzuarbeiten.

2. Digitales Pumpenachsensteuerungssystem (1) nach Anspruch 1, wobei die digitalen Verdrängungspumpen (12, 14) eine unabhängige oder koordinierte Verdrängung von Hydraulikfluid bereitstellen und/oder wobei die digitalen Verdrängungspumpen (12, 14) ein unterschiedliches Volumen an Hydraulikfluid und/oder Hydraulikfluid mit unterschiedlichem Druck in das System (1) einbringen, wobei die digitalen Verdrängungspumpen (12, 14) Axialkolbenpumpen, Schrägachsenpumpen, Verstellschieberpumpen, Radialkolbenpumpen oder Ähnliches sind.

3. Digitales Pumpenachsensteuerungssystem (1) nach einem der vorstehenden Ansprüche, wobei der Zylinder (20) ein Differentialzylinder (20) ist, insbesondere ein Differentialzylinder (20) mit einer Stangenkammer (22a) und eine Kolbenkammer (22a), und/oder wobei der Zylinder (20) im Eilgang und/oder im Kraftgang betriebsfähig ist.

4. Digitales Pumpenachsensteuerungssystem (1) nach einem der vorstehenden Ansprüche, wobei das erste und das zweite Ventil (42, 44) gesteuerte 2/2-Wege-Ventile mit einem geschlossenen Zustand und einem geöffneten Zustand sind und/oder wobei das erste und das zweite Ventil (42, 44) ferner eine Positionsüberwachungsvorrichtung umfassen.

5. Digitales Pumpenachsensteuerungssystem (1) nach einem der vorstehenden Ansprüche, wobei das dritte Ventil ein gesteuertes 2/2-Wege-Ventil mit einem geschlossenen Zustand und einem geöffneten Zustand ist.

6. Digitales Pumpenachsensteuerungssystem (1) nach einem der vorstehenden Ansprüche, wobei ein Tank (50b) über ein viertes Ventil (51) mit einem offenen und einem geschlossenen Zustand hydraulisch mit der zweiten Kammer (22b) des Zylinders (20) verbunden ist und/oder wobei ein gesteuertes Pilotventil (52) zum vorgesteuerten Öffnen des vierten Ventils (51) über eine weitere Rohrleitung (53) mit dem vierten Ventil (51) verbunden ist.

7. Digitales Pumpenachsensteuerungssystem (1) nach Anspruch 6, wobei ein Druckgenerator mit dem gesteuerten Pilotventil (52) verbunden ist, um das Pilotventil (52) durch druckbeaufschlagtes Hydraulikfluid zu steuern, das von einer Druckquelle (60) kommt.

8. Digitales Pumpenachsensteuerungssystem (1) nach Anspruch 6 oder 7, wobei das Pilotventil (52) ein gesteuertes 2/3-Wege-Ventil mit einem Druckbeaufschlagungszustand und einem Druckverringerungszustand ist.

9. Verfahren zur Verwendung des digitalen Pumpenachsensteuerungssystems nach einem der vorstehenden Ansprüche, wobei:
das dritte Ventil (46) zum Schließen geschaltet ist und
das erste und das zweite Ventil (42, 44) zum Öffnen geschaltet sind;
die erste digitale verstellbare Verdrängungspumpe (12) geschaltet ist, um eine positive Verdrängung von Hydraulikfluid bereitzustellen, und
die zweite digitale verstellbare Verdrängungspumpe (14) geschaltet ist, um eine negative Verdrängung von Hydraulikfluid bereitzustellen,
sodass eine Aufwärtsbewegung des Zylinders erreicht wird.

10. Verfahren zur Verwendung des digitalen Pumpenachsensteuerungssystems nach den Ansprüchen 1 bis 8, wobei:
das dritte Ventil (46) zum Schließen geschaltet ist und
die erste digitale verstellbare Verdrängungspumpe (12) geschaltet ist, um eine negative Verdrängung von Hydraulikfluid bereitzustellen, und
die zweite digitale verstellbare Verdrängungspumpe (14) geschaltet ist, um eine positive Verdrängung von Hydraulikfluid bereitzustellen,
sodass eine Abwärtsbewegung des Zylinders erreicht wird.

11. Verfahren zur Verwendung des digitalen Pumpenachsensteuerungssystems nach den Ansprüchen 1 bis 8, wobei:
das erste, das zweite und das dritte Ventil (42, 44, 46) offen geschaltet sind und
die erste und die zweite digitale verstellbare Verdrängungspumpe (12, 14) so geschaltet sind, dass sie dieselbe Verdrängung von Hydraulikfluid zu der zweiten Kammer (22b) des Zylinders (20) bereitstellen,
sodass eine geringe Kraftabwärtsbewegung des Zylinders(20) erreicht wird.

12. Verfahren zur Verwendung des digitalen Pumpenachsensteuerungssystems (1) nach Anspruch 7 oder 8, wobei:
das zweite Ventil (44) geschlossen und das Pilotventil (52) in den Druckverringerungszustand geschaltet ist und
das erste und das dritte Ventil (42, 46) offen geschaltet sind und
die erste und die zweite digitale verstellbare Verdrängungspumpe (12, 14) so geschaltet sind, dass sie dieselbe Verdrängung von Hydraulikfluid aus der ersten Kammer (22a) des Zylinders (20) an den offenen Tank (50) bereitstellen,
sodass der Tank (50b) eine Verdrängung von Hydraulikfluid in die zweite Kammer (22b) bewirkt, um das Volumen an Hydraulikfluid im System (1) zu kompensieren.

13. Verfahren zur Verwendung des digitalen Pumpenachsensteuerungssystems (1) nach Anspruch 7 oder 8, wobei:
das dritte Ventil (46) geschlossen geschaltet und das Pilotventil (52) in einen drucklosen Zustand geschaltet sind, sodass das vierte Ventil (51) geschlossen ist;
das erste und das zweite Ventil (42, 44) offen geschaltet sind;
sodass eine Dekompressionsphase des Zylinders (20) erfolgt und eine Verdrängung von Hydraulikfluid aus der zweiten Kammer (22b) an den offenen Tank (50) eine Drehbewegung der zweiten digitalen verstellbaren Verdrängungspumpe (14), durch die der Motor (10) als Energiegenerator fungiert, bewirkt wird.

14. Verfahren zur Verwendung des digitalen Pumpenachsensteuerungssystems (1) nach Anspruch 7 oder 8, wobei:
das Pilotventil (52) in den druckbeaufschlagten Zustand geschaltet ist, wobei das vierte Ventil (51) geöffnet wird, und
das erste und das dritte Ventil (42, 46) offen geschaltet und das zweite Ventil (44) geschlossen geschaltet sind; und
die erste und die zweite digitale verstellbare Verdrängungspumpe (12, 14) so geschaltet sind, dass sie dieselbe Verdrängung von Hydraulikfluid zu der ersten Kammer (22a) des Zylinders (20) bereitstellen,
sodass der Zylinder eine schnelle Aufwärtsbewegung ausführt und das Hydraulikfluid in der zweiten Kammer (22b) des Zylinders (20) durch das offene vierte Ventil (51) in den Tank (50b) verdrängt wird.

15. Verwendung des digitalen Pumpenachsensteuerungssystems (1) nach einem der Ansprüche 1 bis 8 gemäß dem Verfahren der Ansprüche 9 bis 14 für Pressmaschinen, Tiefziehmaschinen oder Spritzgießmaschinen.

## Revendications

1. Système de contrôle d'axe de pompe numérique (1) avec un circuit au moins partiellement ouvert comprenant :
un moteur électrique (10), alimentant une première et une deuxième machine hydraulique (12, 14), dans lequel les première et deuxième machines hydrauliques (12, 14) sont connectées d'une manière verrouillée en rotation l'une à l'autre ;
au moins un vérin (20), ayant une première chambre (22a) et une deuxième chambre (22b), dans lequel la première chambre (22a) du vérin (20) est connectée à travers une première canalisation (32) à la première machine hydraulique (12) et la deuxième chambre (22b) du vérin (20) est connectée à travers une deuxième canalisation (34) à la deuxième machine hydraulique (14) ;
une première vanne (42) agencée dans la première canalisation (32) ;
une deuxième vanne (44) agencée dans la deuxième canalisation (34) ;
une troisième vanne (46) agencée dans une troisième canalisation (36), dans lequel la troisième canalisation (36) connecte une portion de la première canalisation (32) agencée entre la première machine hydraulique (12) et la première vanne (42) et une portion de la deuxième canalisation (34) agencée entre la deuxième machine hydraulique (14) et la deuxième vanne (44) ; et
un réservoir ouvert (50) fournissant du fluide hydraulique à des entrées des première et deuxième machines hydrauliques (12, 14),
**caractérisé en ce que**
les première et deuxième machines hydrauliques (12, 14) sont des pompes à déplacement variable numériques, chacune fournissant un déplacement positif et négatif de fluide hydraulique, et dans lequel la troisième vanne (46) permet aux deux machines hydrauliques (12, 14) de travailler ensemble sur la même chambre (22a, 22b) du vérin (20).

2. Système de contrôle d'axe de pompe numérique (1) selon la revendication 1, dans lequel les pompes à déplacement variable numériques (12, 14) fournissent un déplacement indépendant ou coordonné de fluide hydraulique, et/ou dans lequel les pompes à déplacement variable numériques (12, 14) fournissent un volume différent de fluide hydraulique et/ou de fluide hydraulique avec une pression différente, dans le système (1), dans lequel les pompes à déplacement variable numériques (12, 14) sont des pompes à pistons axiaux, des pompes à axes courbés, des pompes à palettes à déplacement variable, des pompes à pistons radiaux ou similaires.

3. Système de contrôle d'axe de pompe numérique (1) selon l'une quelconque des revendications précédentes, dans lequel le vérin (20) est un vérin différentiel (20), spécialement un vérin différentiel (20) ayant une chambre de tige (22a) et une chambre de piston (22a), et/ou dans lequel le vérin (20) est opérable en vitesse rapide et/ou en force.

4. Système de contrôle d'axe de pompe numérique (1) selon l'une quelconque des revendications précédentes, dans lequel les première et deuxième vannes (42, 44) sont des vannes 2/2 voies contrôlées ayant un état fermé et un état ouvert, et/ou dans lequel les première et deuxième vannes (42, 44) comprennent en outre un dispositif de surveillance de position.

5. Système de contrôle d'axe de pompe numérique (1) selon l'une quelconque des revendications précédentes, dans lequel la troisième vanne est une vanne 2/2 voies contrôlée ayant un état fermé et un état ouvert.

6. Système de contrôle d'axe de pompe numérique (1) selon l'une quelconque des revendications précédentes, dans lequel un réservoir (50b) est connecté hydrauliquement avec la deuxième chambre (22b) du vérin (20) à travers une quatrième vanne (51) ayant un état ouvert et un fermé, et/ou dans lequel une vanne pilote contrôlée (52) pour piloter l'ouverture de la quatrième vanne (51) est connectée à travers une conduite supplémentaire (53) à la quatrième vanne (51).

7. Système de contrôle d'axe de pompe numérique (1) selon la revendication 6, dans lequel un générateur de pression est connecté à la vanne pilote contrôlée (52) afin de contrôler la vanne pilote (52) à travers du fluide hydraulique pressurisé venant d'une source de pression (60).

8. Système de contrôle d'axe de pompe numérique (1) selon la revendication 6 ou 7, dans lequel la vanne pilote (52) est une vanne 2/3 voies contrôlée ayant un état de pressurisation et un état de dépressurisation.

9. Procédé d'utilisation du système de contrôle d'axe de pompe numérique selon l'une quelconque des revendications précédentes, dans lequel :
la troisième vanne (46) est commutée pour se fermer, et
les première et deuxième vannes (42, 44) sont commutées pour s'ouvrir ;
la première pompe à déplacement variable numérique (12) est commutée pour fournir un déplacement positif de fluide hydraulique, et
la deuxième pompe à déplacement variable numérique (14) est commutée pour fournir un déplacement négatif de fluide hydraulique,
de telle sorte qu'un mouvement vers le haut du vérin est obtenu.

10. Procédé d'utilisation du système de contrôle d'axe de pompe numérique selon les revendications 1 à 8, dans lequel :
la troisième vanne (46) est commutée pour se fermer, et
la première pompe à déplacement variable numérique (12) est commutée pour fournir un déplacement négatif de fluide hydraulique, et
la deuxième pompe à déplacement variable numérique (14) est commutée pour fournir un déplacement positif de fluide hydraulique,
de telle sorte qu'un mouvement vers le bas du vérin est obtenu.

11. Procédé d'utilisation du système de contrôle d'axe de pompe numérique selon les revendications 1 à 8 dans lequel :
les première, deuxième et troisième vannes (42, 44, 46) sont commutées sur ouvertes, et
les première et deuxième pompes à déplacement variable numériques (12, 14) sont commutées pour fournir le même déplacement de fluide hydraulique vers la deuxième chambre (22b) du vérin (20),
de telle sorte qu'un mouvement vers le bas de faible force du vérin (20) est obtenu.

12. Procédé d'utilisation du système de contrôle d'axe de pompe numérique (1) selon la revendication 7 ou 8, dans lequel :
la deuxième vanne (44) est commutée pour être fermée et la vanne pilote (52) est commutée vers l'état de dépressurisation, et
les première et troisième vannes (42, 46) sont commutées sur ouvertes, et
les première et deuxième pompes à déplacement variable numériques (12, 14) sont commutées pour fournir le même déplacement de fluide hydraulique depuis la première chambre (22a) du vérin (20) vers le réservoir ouvert (50),
de telle sorte que le réservoir (50b) provoque un déplacement de fluide hydraulique dans la deuxième chambre (22b) pour compenser le volume de fluide hydraulique dans le système (1).

13. Procédé d'utilisation du système de contrôle d'axe de pompe numérique (1) selon la revendication 7 ou 8, dans lequel :
la troisième vanne (46) est commutée pour être fermée et la vanne pilote (52) est commutée vers l'état dépressurisé de telle sorte que la quatrième vanne (51) est fermée ;
les première et deuxième vannes (42, 44) sont commutées sur ouvertes ;
de telle sorte qu'une phase de décompression du vérin (20) se produit et un déplacement de fluide hydraulique depuis la deuxième chambre (22b) vers le réservoir ouvert (50) provoque un mouvement de couple de la deuxième pompe à déplacement variable numérique (14) à travers lequel le moteur (10) agit comme un générateur d'énergie.

14. Procédé d'utilisation du système de contrôle d'axe de pompe numérique (1) selon la revendication 7 ou 8, dans lequel :
la soupape pilote (52) est commutée vers l'état pressurisé, de telle manière que la quatrième vanne (51) est ouverte, et
les première et troisième vannes (42, 46) sont commutées sur ouvertes et la deuxième vanne (44) est commutée sur fermée ; et
les première et deuxième pompes à déplacement variable numériques (12, 14) sont commutées pour fournir le même déplacement de fluide hydraulique vers la première chambre (22a) du vérin (20),
de telle sorte que le vérin a un mouvement vers le haut à vitesse rapide et les fluides hydrauliques dans la deuxième chambre (22b) du vérin (20) sont déplacés dans le réservoir (50b) à travers la quatrième vanne (51) ouverte.

15. Utilisation du système de contrôle d'axe de pompe numérique (1) selon l'une quelconque des revendications 1 à 8, conformément au procédé selon les revendications 9 à 14, pour des machines de pressage, des machines d'étirage profond ou des machines de moulage par injection.
